# EUROPEAN PATENT APPLICATION

(11) **EP 3 483 822 A1**
(43) Date of publication of application: **15.05.2019**
(21) Application number: 17823953.9
(22) Date of filing: 15.06.2017
(51) Int. Cl.: G06Q 30/02

(54) **INFORMATION PRESENTATION DEVICE, INFORMATION PRESENTATION SYSTEM, AND INFORMATION PRESENTATION METHOD**

(30) Priority: 05.07.2016 JP 2016133619
(71) Applicant: Panasonic Intellectual Property Management Co., Ltd., Osaka-shi, Osaka 540-6207 (JP)
(72) Inventor: FUKUI Takayuki, Osaka 540-6207 (JP); SHIN Hidehiko, Osaka 540-6207 (JP); OKIMOTO Yoshiyuki, Osaka 540-6207 (JP); ITOH Tomoaki, Osaka 540-6207 (JP); YAMAGUCHI Koichiro, Osaka 540-6207 (JP)
(74) Representative: Vigand, Philippe
(86) International application number: PCT/JP2017/022043
(87) International publication number: WO 2018/008346

(57) **Abstract**

An information presentation device includes an acquisition unit that acquires purchase data indicating items purchased in a facility, position information indicating where each of items is placed in the facility, and a layout map representing an inside of the facility, and a controller that extracts a plurality of items purchased by a person from the purchase data based on a predetermined condition and generates sales information on the plurality of items thus extracted based on the purchase data, and a display unit that displays a first figure representing each of the plurality of items purchased by the person and a second figure representing a link between the plurality of items together with the layout map representing the inside of the facility based on the sales information and the position information.

## Description

### TECHNICAL FIELD

The present disclosure relates to an information presentation device, an information presentation system, and an information presentation method that present information indicating items (e.g. goods or services) purchased in a facility such as a store.

### BACKGROUND ART

PTL 1 discloses an analysis system that compares, using data acquired from a surveillance camera and point of sales (POS) data, purchased items with a number of persons who pass or stop near the purchased items to analyze sales opportunity loss.

### Citation List

### Patent Literature

PTL 1: Japanese Patent No. 5731766

### SUMMARY OF THE INVENTION

The present disclosure provides an information presentation device, an information presentation system, and an information presentation method that effectively present information indicating items (e.g. goods or services) purchased in a facility such as a store.

An information presentation device according to the present disclosure includes an acquisition unit that acquires purchase data indicating items purchased in a facility, position information indicating where each of the items is placed in the facility, and a layout map representing an inside of the facility, the items being goods or services, a controller that extracts a plurality of items purchased by a person from the purchase data based on a predetermined condition and generates sales information on the plurality of items thus extracted based on the purchase data, and a display unit that displays a plurality of first figures representing the plurality of items respectively and a second figure representing a link between the plurality of items together with the layout map based on the sales information and the position information.

An information presentation system according to the present disclosure includes a purchase terminal device that outputs purchase data indicating items purchased in a facility, the items being goods or services, and the information presentation device that acquires the purchase data, the position information indicating where each of the items is placed in the facility and the layout map representing the inside of the facility, and displays the plurality of first figures representing the plurality of items respectively and the second figure representing the link between the plurality of items together with the layout map.

An information presentation method according to the present disclosure includes causing an acquisition unit to acquire purchase data indicating items purchased in a facility, position information indicating where each of the items is placed in the facility, and a layout map representing an inside of the facility, the items being goods or services, causing a controller to extract a plurality of items purchased by a person from the purchase data based on a predetermined condition and generate sales information on the plurality of items thus extracted based on the purchase data, and causing a display unit to display a plurality of first figures representing the plurality of items respectively and a second figure representing a link between the plurality of items together with the layout map based on the sales information and the position information.

The information presentation device, the information presentation system, and the information presentation method according to the present disclosure effectively present information indicating items (e.g. goods or services) purchased in a facility such as a store.

### BRIEF DESCRIPTION OF DRAWINGS

FIG. 1 is a block diagram showing a configuration of an information presentation system of a first exemplary embodiment.
FIG. 2 is a flowchart for describing a whole operation of presenting information according to the first exemplary embodiment.
FIG. 3 is a flowchart showing step S201 of FIG. 2 in detail according to the first exemplary embodiment.
FIG. 4 is a table showing an example of POS data according to the first exemplary embodiment.
FIG. 5 is a table showing an example of classified data according to the first exemplary embodiment.
FIG. 6 is a flowchart showing step S202 of FIG. 2 in detail according to the first exemplary embodiment.
FIG. 7 is a table showing an example of node data according to the first exemplary embodiment.
FIG. 8 is a table showing an example of edge data according to the first exemplary embodiment.
FIG. 9 is a flowchart showing step S203 of FIG. 2 in detail according to the first exemplary embodiment.
FIG. 10 is a table showing an example of shelf coordinate data according to the first exemplary embodiment.
FIG. 11 is a flowchart showing step S204 of FIG. 2 in detail according to the first exemplary embodiment.
FIG. 12 is a flowchart showing step S205 of FIG. 2 in detail according to the first exemplary embodiment.
FIG. 13 is a diagram showing an example of a screen display on a display unit according to the first exemplary embodiment.
FIG. 14 is a table showing an example of edge data according to a second exemplary embodiment.
FIG. 15 is a flowchart showing step S202 of FIG. 2 in detail according to the second exemplary embodiment.

### DESCRIPTION OF EMBODIMENTS

Hereinafter, exemplary embodiments will be described in detail with reference to the drawings as appropriate. However, detailed description beyond necessity may be omitted. For example, a detailed description of a well-known matter and duplicate description of substantially the same configuration may be omitted. Such omission is intended to prevent the following description from being unnecessarily redundant and to help those skilled in the art to easily understand the following description. Note that the inventors provide the attached drawings and the following description to help those skilled in the art to fully understand the present disclosure, and the accompanying drawings and the following description are not intended to limit the subject matters of the claims.

### (First exemplary embodiment)

An information presentation system of the present exemplary embodiment displays information on purchased items together with layout data (layout map) of a store. Specifically, node figures (first figures) representing items purchased by a person and an edge figure (a second figure) representing a link between the items simultaneously purchased by the person are displayed on the layout data (layout map) of a store. This configuration allows better layout design to be made based on a layout of items simultaneously purchased.

Herein, "simultaneously" means "in a single transaction" rather than timewise simultaneity. That a purchaser "simultaneously" purchases a plurality of items in a store refers to, for example, that the purchaser puts item A and item B in the store into a shopping basket and makes payments for item A and item B all together at a checkout. That is, shopping is finished with a single receipt issued. Even in a case where respective timings when item A and item B are put into the shopping basket are different from each other, the payments are made at the same time; thus, the case is defined that item A and item B are purchased "simultaneously".

Moreover, terms used in the following description are defined as follows.

"Node" is information on a purchased item.

"Edge" is information associated with two items purchased simultaneously.

"Node figure" is a figure (for example, a dot, a circle, or a polygon) representing the node.

"Edge figure" is a figure (for example, a line figure such as a straight line or a curve) representing the edge.

"Associated purchase graph" is a figure including the node figure and the edge figure.

### 1. Configuration

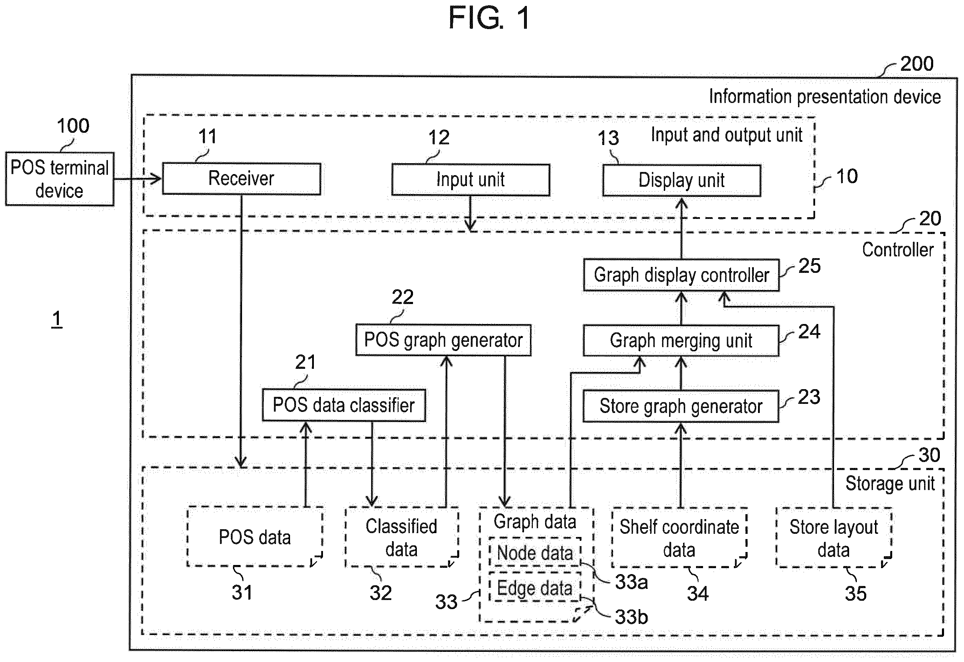

FIG. 1 shows a configuration of the information presentation system of the first exemplary embodiment. Information presentation system 1 includes at least one POS terminal device 100 that generates and outputs POS data 31 indicating items purchased in a store, and information presentation device 200 that uses POS data 31 output from POS terminal device 100 to present, in the form of the associated purchase graph, information on items purchased simultaneously.

POS terminal device 100 includes a barcode reader equipped with, for example, a scanner, a charge-coupled device, or a laser and generates POS data 31 indicating items purchased by a person in a store. POS terminal device 100 further includes an interface circuit used for communication with an external device based on a predetermined communication standard (for example, a local area network (LAN) or WiFi) and outputs POS data 31 thus generated.

Information presentation device 200 includes input and output unit 10, controller 20 that controls a whole of information presentation device 200, and storage unit 30 that stores various pieces of information.

Input and output unit 10 includes receiver 11 that receives POS data 31 output from POS terminal device 100, input unit 12 that receives input from a user, and display unit 13 that displays information on associated purchase. Receiver 11 includes an interface circuit for communication with an external device based on the predetermined communication standard (for example, a LAN or WiFi). Input unit 12 is, for example, a keyboard, a mouse, or a touch panel. Receiver 11 and input unit 12 serve as an acquisition unit that acquires information from the outside. Display unit 13 is, for example, a liquid crystal display.

Controller 20 includes POS data classifier 21 that generates classified data 32 from POS data 31, POS graph generator 22 that generates graph data 33 (sales information on items) based on classified data 32, store graph generator 23 that calculates a center position of shelf coordinates from shelf coordinate data 34, graph merging unit 24 that adds information on the center position of shelf coordinates to graph data 33, and graph display controller 25 that superimposes the associated purchase graph onto store layout data 35 based on graph data 33 and causes display unit 13 to display the graph on store layout data 35.

Classified data 32 is part of POS data 31 extracted based on a predetermined condition (classification criterion). Graph data 33 includes information used for generating the associated purchase graph. Specifically, graph data 33 includes node data 33a including information on items purchased by a person and edge data 33b including information associated with the items purchased simultaneously by the person. Shelf coordinate data 34 includes information indicating positions of shelf coordinates in the store and items placed on shelves. Store layout data 35 is a layout map of shelves, aisles, and the like in the store.

Controller 20 can be configured with a semiconductor element or the like. A function of controller 20 may be implemented only by hardware or may be implemented by a combination of hardware and software. Controller 20 can be configured with, for example, a microcomputer, a central processing unit (CPU), a micro processing unit (MPU), a digital signal processor (DSP), a field-programmable gate array (FPGA), or an application specific integrated circuit (ASIC). Controller 20 serves as an acquisition unit that acquires information stored in storage unit 30.

Storage unit 30 stores information received by receiver 11 and information generated by controller 20. For example, POS data 31, classified data 32, graph data 33, shelf coordinate data 34, store layout data 35 are stored. Storage unit 30 can be configured with, for example, a random access memory (RAM), a dynamic random access memory (DRAM), a ferroelectric RAM, a flash memory, or a magnetic disk. Alternatively, storage unit 30 can be configured with any combination of a RAM, a DRAM, a ferroelectric RAM, a flash memory, and a magnetic disk.

### 2. Operation

### 2.1 Entire flow

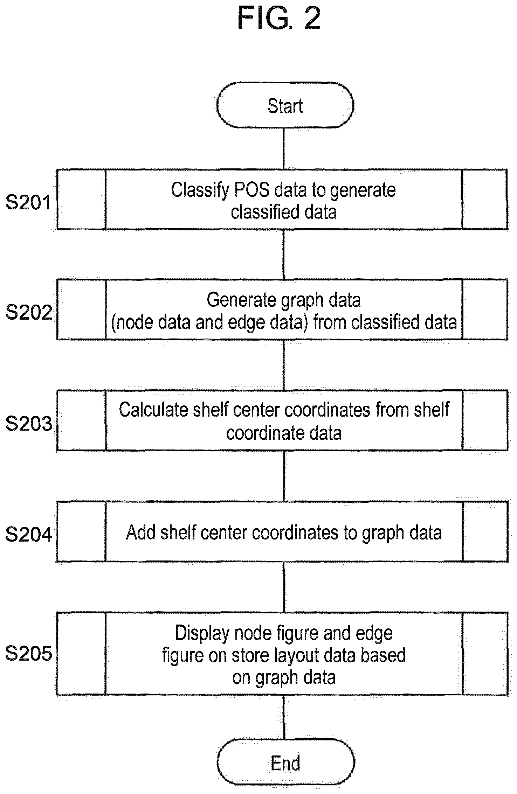

FIG. 2 shows a whole operation of display control for the associated purchase graph performed by controller 20. POS data classifier 21 extracts part of POS data 31 based on the predetermined condition (classification criterion) to generate classified data 32 (step S201). The predetermined condition (classification criterion) is, for example, a date, a day of week, a time of day, a specific item category (for example, a vegetable or a meat), or a specific item name (for example, bread or milk). One piece of classified data 32 corresponds to one associated purchase graph. Classified data 32 may be generated in proportion to a number of associated purchase graphs desired to be displayed.

POS graph generator 22 generates, from classified data 32, graph data 33 for displaying the associated purchase graph (step S202). Graph data 33 includes node data 33a and edge data 33b.

Store graph generator 23 calculates a center position of shelf coordinates from shelf coordinate data 34 (step S203), and graph merging unit 24 adds information on the center position of shelf coordinates to graph data 33 (step S204). Graph display controller 25 causes display unit 13 to display the associated purchase graph (the node figure and the edge figure) on store layout data 35 based on graph data 33 (step S205).

2.2 Generation of classified data

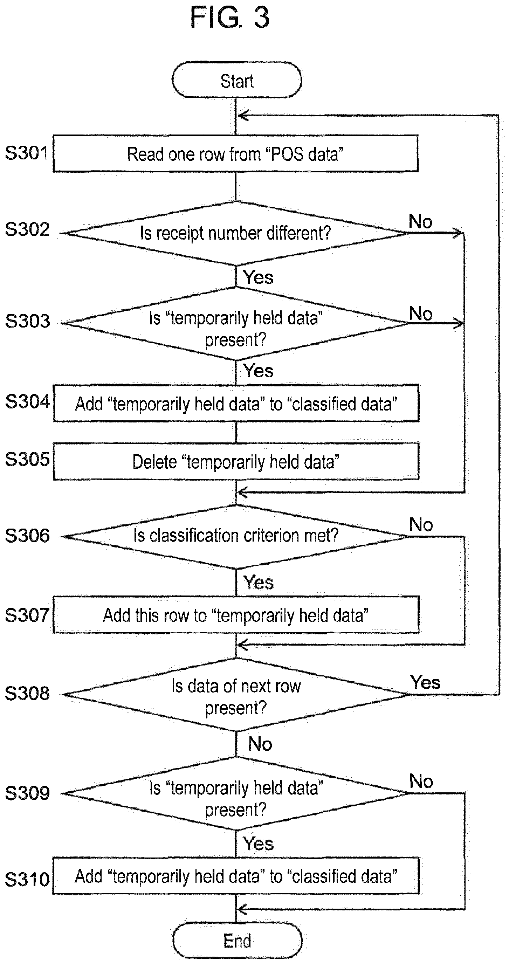

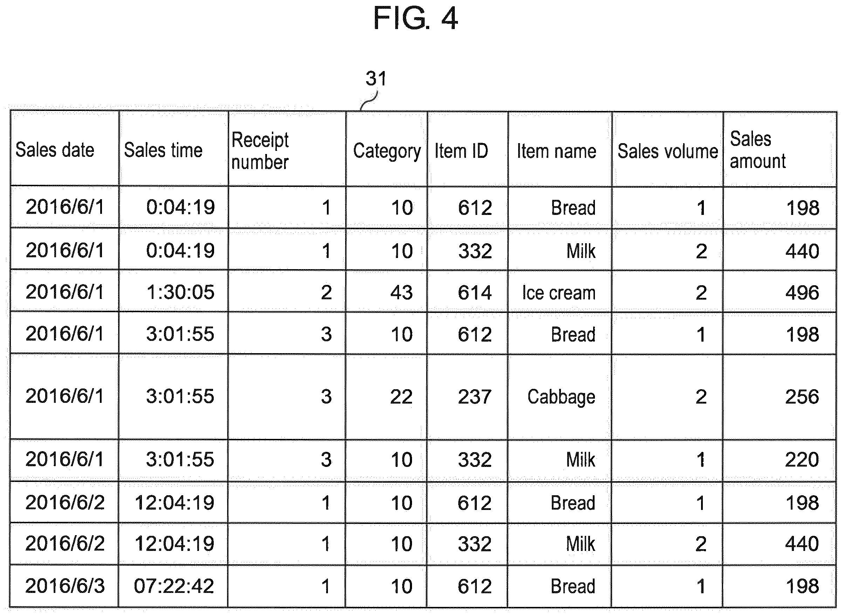

FIG. 3 shows generation processing of classified data 32 (step S201 of FIG. 2) in detail. POS data classifier 21 reads data of one row from POS data 31 as shown in FIG. 4 (step S301) and determines whether a receipt number in the data of one row thus read is different from a receipt number previously read (step S302). When the receipt number thus read is identical to the receipt number previously read (No in step S302), POS data classifier 21 determines whether the data of one row read in step S301 meets the classification criterion (step S306).

When the receipt number thus read is different from the receipt number previously read (Yes in step S302), POS data classifier 21 determines whether temporarily held data is present in storage unit 30 (step S303). "Temporarily held data" refers to data to be added in step S307 that includes the receipt number previously read, is extracted from POS data 31, meets the classification criterion, and is temporarily stored into storage unit 30. When the temporarily held data is present in storage unit 30 (that is, when data that includes the receipt number previously read and meets the classification criterion is present), POS data classifier 21 adds the temporarily held data to classified data 32 (step S304) and then deletes the temporarily held data from storage unit 30 (step S305). Extraction processing, based on the classification criterion, on the receipt number previously read ends. Then, POS data classifier 21 proceeds to step S306. Subsequently, the following processing is performed on the receipt number read this time in step S301. When the temporarily held data is not present in storage unit 30 (that is, when data that includes the receipt number previously read and meets the classification criterion is not present), POS data classifier 21 skips step S304 and step S305 and proceeds to step S306.

Only when current data of one row read in step S301 meets the classification criterion (Yes in step S306), POS data classifier 21 adds the data of one row to temporarily held data (step S307). When POS data classifier 21 determines whether data of the next row is present in POS data 31 (step S308) and determines that data of the next row is present (Yes in step S308), POS data classifier 21 returns to step S301 and repeats the processing in which POS data classifier 21 reads the next row and extracts only data that meets the classification criterion (steps S301 to S308). When data of the next row is not present (No in step S308), that is, after all POS data 31 is read, POS data classifier 21 determines whether temporarily held data (data of the last row) is present in storage unit 30 (S309). When the temporarily held data is present in storage unit 30 (Yes in step S309), that is, when the data of the last row meets the classification criterion, POS data classifier 21 adds the temporarily held data corresponding to the data of the last row to the classified data (step S310). Accordingly, only data that meets the classification criterion is extracted from POS data 31 and classified data 32 is generated. After step S310 and when step S309 results in No, the generation processing of classified data 32 (step S201) ends.

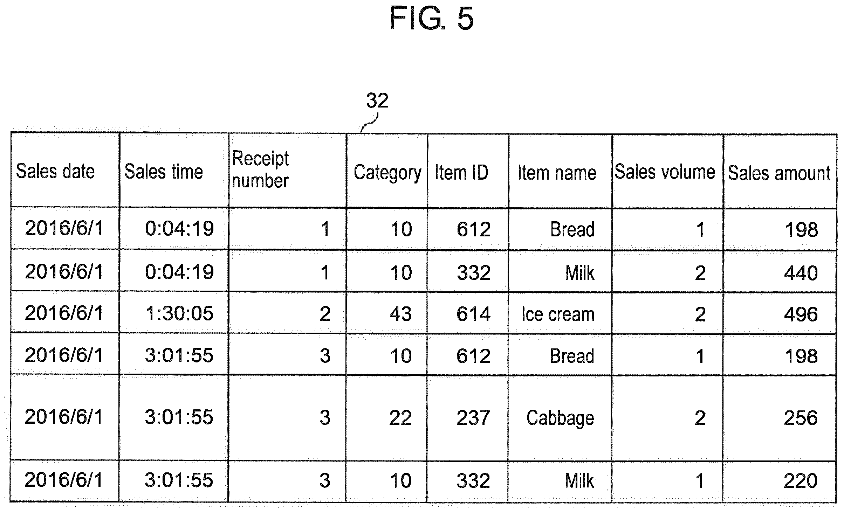

FIG. 5 shows classified data 32 extracted from POS data 31 based on a sales date (June 1, 2016). Classified data 32 shown in FIG. 5 is, for example, generated only from data including a character string of "6/1" extracted from POS data 31. POS data 31, a source for the extraction, is data accumulated for a predetermined period (for example, one month). Classified data 32 is generated in a format identical to the format of POS data 31.

### 2.3 Generation of graph data

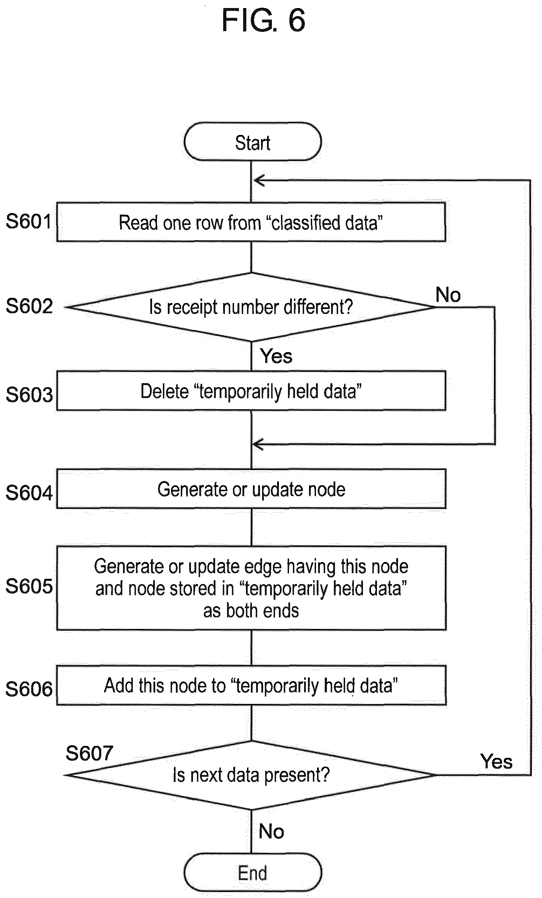

FIG. 6 shows generation processing of graph data 33 (step S202 of FIG. 2) in detail. POS graph generator 22 reads data of one row from classified data 32 (step S601) and determines whether a receipt number in the data of one row thus read is different from a receipt number previously read (step S602).

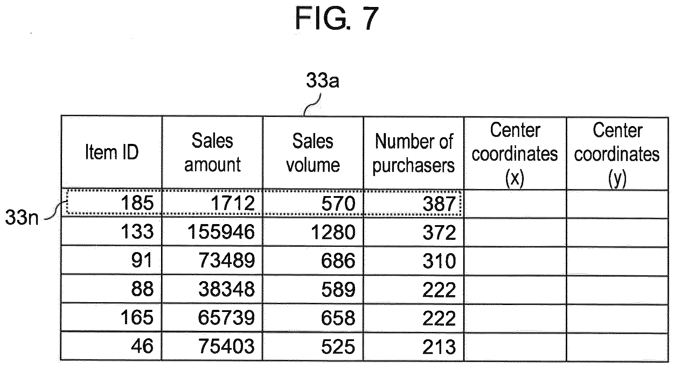

When the receipt number thus read is identical to the receipt number previously read (No in step S602), POS graph generator 22 generates, for the data of one row read in step S601, node 33n, as shown in FIG. 7, based on an item ID and adds node 33n to node data 33a (step S604). As shown in FIG. 7, node 33n generated in step S604 includes information on an identification number of an item (item ID), a sales amount of the item, a sales volume of the item, and a number of persons who have purchased the item (a number of purchasers). At this point, node 33n does not include information on shelf center coordinates (x, y). When node 33n for the item ID read in step S601 is already present in node data 33a, POS graph generator 22 updates node 33n based on the data of one row thus read. That is, POS graph generator 22 updates the sales amount, the sales volume, and the number of purchasers based on the data of one row thus read.

When the receipt number thus read is different from the receipt number previously read (Yes in step S602), POS graph generator 22 deletes temporarily held data (step S603) and proceeds to step S604. "Temporarily held data" includes identification information (item ID) on a node for the receipt number previously read that is added to "temporarily held data" in step S606.

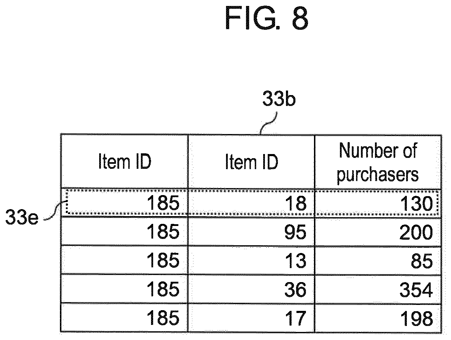

POS graph generator 22 generates edge 33e as shown in FIG. 8, edge 33e having the node generated in step S604 as one end and each of all nodes held in the temporarily held data as another end. As shown in FIG. 8, edge 33e generated in step S605 includes information on respective identification numbers of two items (item IDs) that are both the ends of the edge and the number of persons who have purchased the two items simultaneously (the number of purchasers). In step S605, when edge 33e is already present in edge data 33b, POS graph generator 22 updates the number of purchasers of edge 33e.

POS graph generator 22 adds node 33n generated in step S604 (for example, an item ID) to the temporarily held data. Accordingly, edge 33e for items purchased simultaneously by a purchaser (that is, for the same receipt number) is generated in step S605.

When POS graph generator 22 determines whether data of the next row is present in classified data 32 (step S607) and determines that data of the next row is present (Yes in step S607), POS graph generator 22 returns to step S601 and repeats the processing in which POS graph generator 22 reads the next row and generates or updates node 33n and edge 33e (steps S601 to S607). When data of the next row is not present (No in step S607), the generation processing of graph data 33 (step S202) ends.

### 2.4 Calculation of center position of shelf coordinates

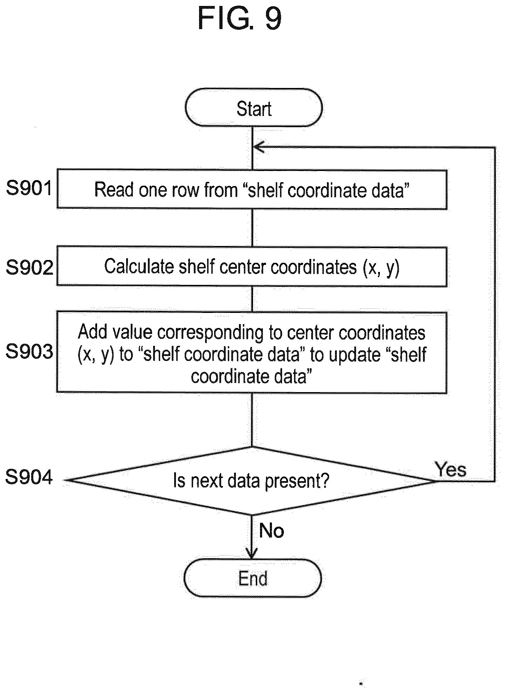

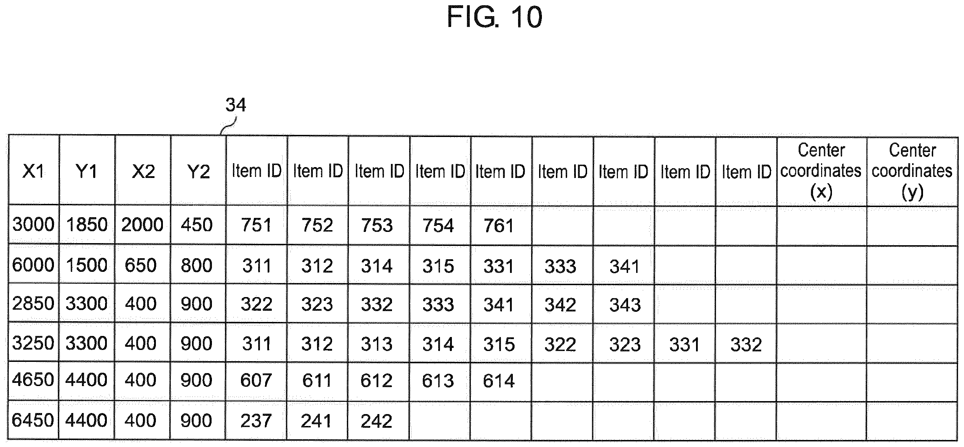

FIG. 9 shows calculation processing of a center position of shelf coordinates (step S203 of FIG. 2) in detail. Store graph generator 23 reads data of one row from shelf coordinate data 34 as shown in FIG. 10 (step S901). As shown in FIG. 10, shelf coordinate data 34 includes coordinates of diagonal opposite ends (X1, Y1, X2, Y2) that indicate an area occupied by a shelf and identification numbers of items (item IDs) placed on the shelf. Store graph generator 23 calculates shelf center coordinates from the coordinates (X1, Y1, X2, Y2) indicating an area occupied by the shelf by "center coordinates (x, y) = (X1 + X2)/2, (Y1 + Y2)/2" (step S902) and adds the center coordinates (x, y) thus calculated to shelf coordinate data 34 (step S903). When store graph generator 23 determines whether data of the next row is present in shelf coordinate data 34 (step S904) and determines that data of the next row is present, store graph generator 23 repeats the calculation processing of the center coordinates (steps S901 to S904). Accordingly, shelf center coordinates (x, y) for data of all rows in shelf coordinate data 34 are calculated. When data of the next row is not present (No in step S904), the calculation processing of the center position of the shelf coordinates (step S203) ends.

### 2.5 Update on graph data

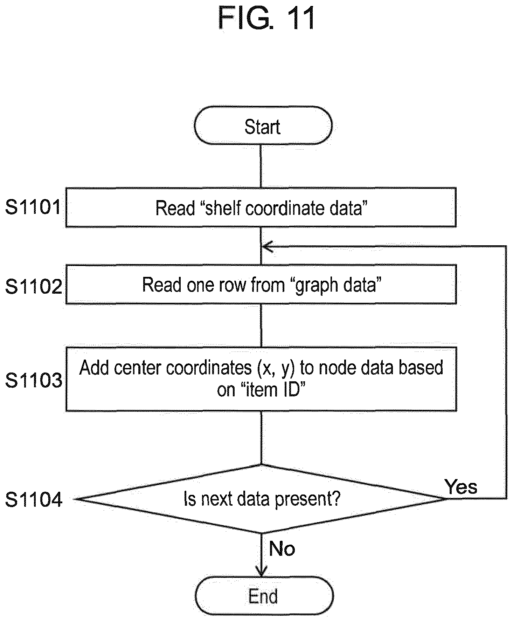

FIG. 11 shows processing for adding the shelf center coordinates (x, y) to graph data 33 (step S204 of FIG. 2) in detail. Graph merging unit 24 reads a whole of shelf coordinate data 34 (step S1101), and further reads node 33n of one row from node data 33a of graph data 33 (step S1102). Graph merging unit 24 searches shelf coordinate data 34 for center coordinates (x, y) based on an item ID and adds the center coordinates (x, y) thus found to node data 33a as an attribute of node 33n. When graph merging unit 24 determines whether data of the next row is present in graph data 33 (step S1104) and determines that data of the next row is present, graph merging unit 24 repeats the processing for adding center coordinates to graph data 33 (steps S1102 to S1104). Accordingly, center coordinates (x, y) for all nodes 33n in node data 33a are added. When data of the next row is not present (No in step S1104), the processing for adding shelf center coordinates (x, y) to graph data 33 (step S204) ends.

### 2.6 Display of associated purchase graph (node figure and edge figure)

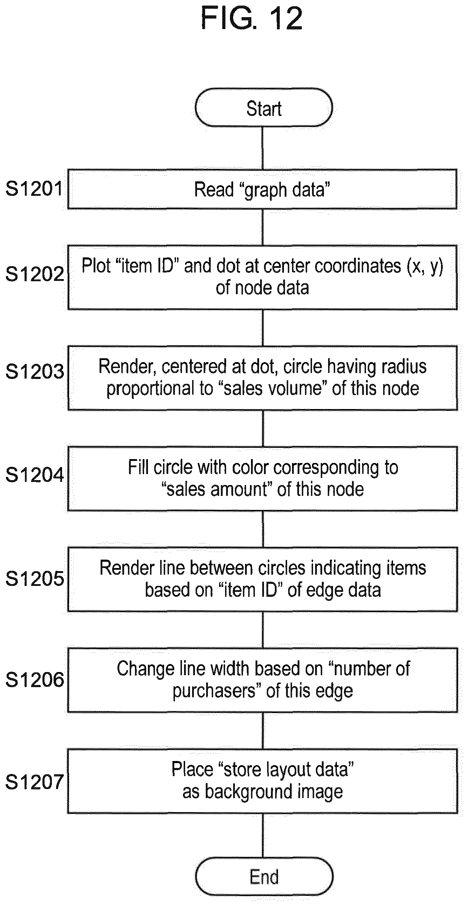

FIG. 12 shows display control processing of the associated purchase graph (step S205 of FIG. 2) in detail. Graph display controller 25 reads graph data 33 (step S1201) and displays, on display unit 13, the associated purchase graph based on graph data 33 (steps S1202 to S1206).

Specifically, graph display controller 25 places, within a screen of display unit 13, item IDs and dots at respective positions of "center coordinates (x, y)" of nodes 33n based on node data 33a (step S1202). Graph display controller 25 renders, centered at each of the dots placed in step S1202, a circle having a radius that is proportional to a value corresponding to "sales volume" of each node 33n (step S1203), and fills the circle with a color corresponding to "sales amount" of each node 33n (step S1204). For example, the greater the value corresponding to "sales volume" is, the greater the radius of the circle becomes, and the circle is filled with blue when a value corresponding to "sales amount" is greater than a predetermined value and is filled with red when the value corresponding to "sales amount" is less than the predetermined value.

Graph display controller 25 renders a line between circles indicating items based on "item IDs" of each edge 33e in edge data 33b (step S1205), and changes a line width based on "the number of purchasers" of each edge 33e (step S1206). For example, the greater a value corresponding to "the number of purchasers" is, the larger the line width becomes.

Graph display controller 25 places store layout data 35 as a background image (step S1207). Then, the display control processing of the associated purchase graph (step S205) ends.

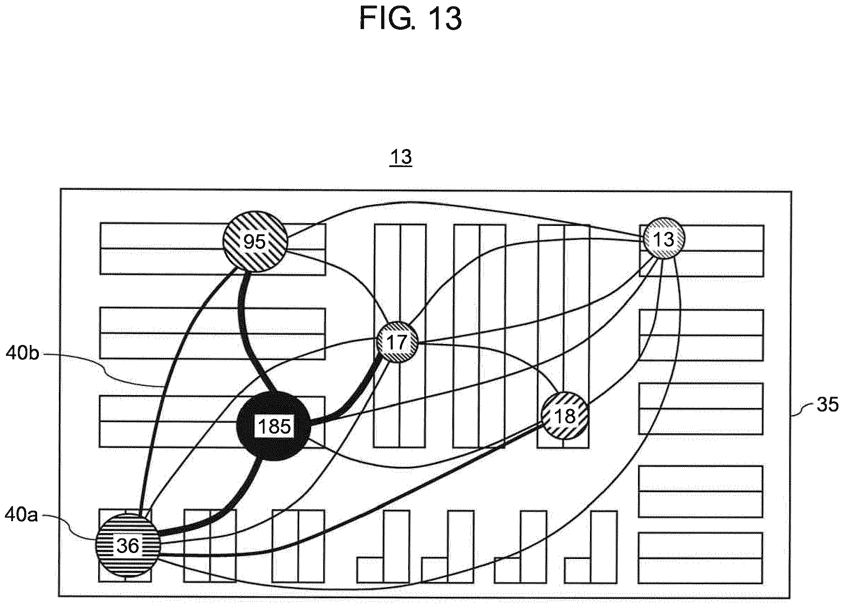

FIG. 13 shows an example of the associated purchase graph superimposed on store layout data 35 displayed by display unit 13. Display unit 13 displays, under the control, as shown in FIG. 12, of graph display controller 25, the associated purchase graph including node figures 40a and edge figures 40b on store layout data 35.

### 3. Effects and other benefits

Information presentation system 1 of the present exemplary embodiment generates, from POS data 31, node data 33a including information on items purchased by a person and edge data 33b including information associated with the items purchased simultaneously by the person, and displays node figures (circles) at item positions on store layout data 35 based on shelf coordinate data 34 and an edge figure (line) extending between the node figures (circles). Moreover, the size and color of the each node figure indicate the sales volume and sales amount of each item, respectively, and the width of the edge figure indicates the number of purchasers who have purchased items simultaneously (occurrence frequency of associated purchase). Accordingly, positions of items purchased simultaneously (occurrence locations of the associated purchase), the occurrence frequency of the associated purchase, and traffic lines of purchasers who have purchased items simultaneously can be recognized together with store layout data 35, which makes it possible to place items and to position shelves such that the associated purchase occurs more frequently. Thus, the use of information presentation system 1 of the present exemplary embodiment allows better layout design to be made.

Note that, in the present exemplary embodiment, POS data 31 is output from POS terminal device 100. Alternatively, purchase data may be output from a different purchase terminal device.

Note that, in the present exemplary embodiment, "simultaneously" means "in a single transaction". However, another payment may be made for another purchase after payment at a checkout, or a plurality of times of payment may be made at a plurality of checkouts in a store. According to the present invention, such a plurality of times of payment can be regarded as "simultaneously". That is, "simultaneously" may also mean "in all transactions" that are made by a purchaser from when the purchaser enters a store until when the purchaser leaves the store. In such a case, not the receipt number but a card number of a card such as a point card by which a purchaser is identified may be used.

### (Second exemplary embodiment)

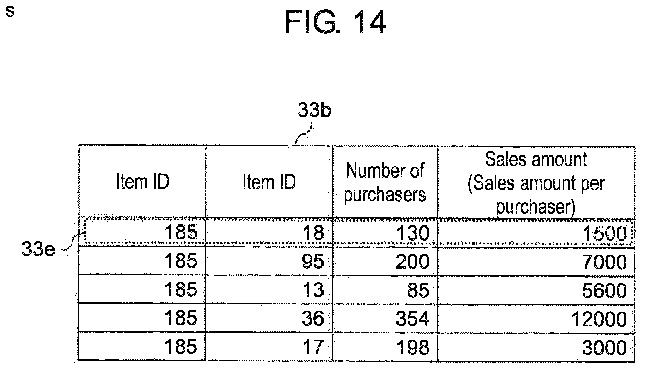

Information presentation system 1 of a second exemplary embodiment adds information on a sales amount per purchaser who has purchased two items simultaneously to edge 33e as an attribute of edge 33e. FIG. 14 shows an example of edge data 33b to be generated in the present exemplary embodiment. Edge data 33b of the present exemplary embodiment includes information on identification numbers of two items (item IDs), a number of persons who have purchased the two items simultaneously (a number of purchasers), and a total sales amount spent by a person who has purchased the two items simultaneously (sales amount per purchaser). The sales amount per purchaser corresponds to an average price resulting from averaging total purchase amounts spent in a store by the persons who have purchased the two items simultaneously.

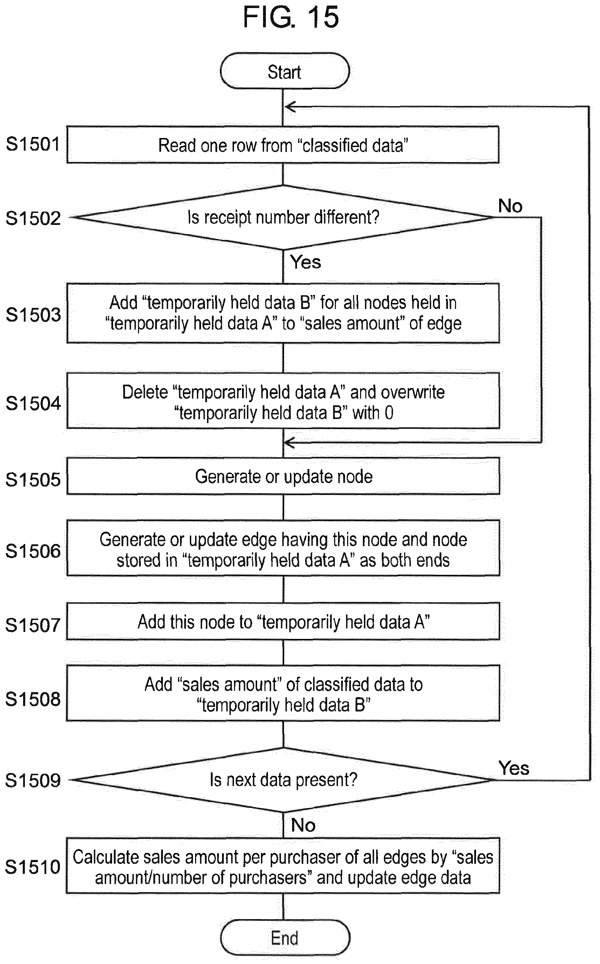

FIG. 15 shows, in detail, generation processing of graph data 33 (step S202 of FIG. 2) according to the second exemplary embodiment. POS graph generator 22 reads data of one row from classified data 32 (step S1501) and determines whether a receipt number in the data of one row thus read is different from a receipt number previously read (step S1502).

When the receipt number thus read is different from the receipt number previously read (Yes in S1502), POS graph generator 22 adds respective values in "temporarily held data B" for all nodes temporarily held in "temporarily held data A" to "sales amount" of edge 33e (step S1503). Herein, "temporarily held data A" includes identification information (item ID) on a node for the receipt number previously read that is added to "temporarily held data A" in step S1507. "Temporarily held data B" includes information on "sales amount" in classified data 32 for the receipt number previously read that is added to "temporarily held data B" in step S1508. A process in step S1503 causes a total sales amount spent by all persons who have simultaneously purchased two items shown in each edge 33e of edge data 33b to be calculated. Then, POS graph generator 22 deletes "temporarily held data A" and overwrites "temporarily held data B" with '0' (step S1504). Subsequently, the following processing is performed on the receipt number read this time in step S1501.

After step S1504 or when the receipt number thus read is identical to the receipt number previously read (No in step S1502), POS graph generator 22 generates node 33n for the data of one row read in step S1501 based on an item ID and adds node 33n to node data 33a (step S1505). Node data 33a is generated in the same way as is shown in FIG. 6 of the first exemplary embodiment. That is, node 33n generated in step S1505 includes, as shown in FIG. 7, information on an identification number of an item (item ID), a sales amount of the item, a sales volume of the item, and the number of persons who have purchased the item (the number of purchasers). When node 33n for the item ID read in step S1505 is already present in node data 33a, POS graph generator 22 updates node 33n based on the data of one row thus read.

POS graph generator 22 generates edge 33e having the node generated in step S1505 as one end and each of all nodes held in "temporarily held data A" as another end (step S1506). In step S1506, when edge 33e having the node generated in step S1505 as one end is already present in edge data 33b, POS graph generator 22 updates the number of purchasers of edge 33e.

POS graph generator 22 adds node 33n generated in step S1505 (for example, the item ID) to "temporarily held data A" (step S1507). Accordingly, edge 33e for items purchased simultaneously by a purchaser (that is, for the same receipt number) is generated in step S1506.

POS graph generator 22 adds "sales amount" in the data of one row read from classified data 32 in step S1501 to "temporarily held data B" (step S1508). Accordingly, "sales amount" for items purchased simultaneously (that is, for the same receipt number) is added to "temporarily held data B".

When POS graph generator 22 determines whether data of the next row is present in classified data 32 (step S1509) and determines that data of the next row is present (Yes in step S1509), POS graph generator 22 returns to step S1501 and repeats the processing in which POS graph generator 22 reads the next row and generates or updates node 33n and edge 33e (steps S1501 to S1509).

When data of the next row is not present (No in step S1509), POS graph generator 22 adds, as in the process of step S1503, respective values in "temporarily held data B" for all nodes temporarily held in "temporarily held data A" to "sales amount" of edge 33e. Then, POS graph generator 22 calculates the sales amount per purchaser for each edge 33e by dividing "sales amount (total sales amount)" of edge 33e by "the number of purchasers" of edge 33e ("the sales amount per purchaser = the total sales amount/the number of purchasers") and updates edge data 33b (step S1510). Then, the generation processing of graph data 33 (step S202) ends.

When the information on the sales amount per purchaser is added to edge data 33b in the processing of FIG. 15, in rendering of an edge figure (step S1205 and step S1506 of FIG. 12), the line width or color of the edge figure can be changed in proportion to, for example, a value corresponding to "sales amount per purchaser" of edge 33e. For example, the greater the value corresponding to "sales amount per purchaser" is, the larger the line width becomes or the deeper the color becomes. This allows for an analysis of combined purchase behavior of a purchaser who simultaneously purchases more items.

### (Other exemplary embodiments)

As described above, the first and second exemplary embodiments have been described as examples of the technique disclosed in the present application. However, the technique in the present disclosure is not limited to the exemplary embodiments and is applicable to exemplary embodiments in which changes, replacements, additions, omissions, or the like are made as appropriate. Furthermore, the components described in the first and second exemplary embodiments can be combined to form a new exemplary embodiment.

For example, the size and color of the node figure may be changed in proportion to not only the sales volume and the sales amount for each item but also the number of purchasers for each item or any combination of the sales volume, the sales amount, and the number of purchasers. Furthermore, the size and color of the edge figure may be changed in proportion to not only the number of purchasers and the sales amount per purchaser but also the volume of items simultaneously purchased or any combination of the number of purchasers, the sales amount per purchaser, and the volume of items simultaneously purchased. For example, the line width of the edge figure may be determined based on an average volume resulting from averaging total purchase volumes of items purchased in a store by persons who have purchased two items. This allows for an analysis of combined purchase behavior of a purchaser who simultaneously purchases more items.

Moreover, the line width of the edge figure may be changed in proportion to the number of purchasers, and the color depth of the edge figure may be determined based on an average price resulting from averaging total purchase amounts spent by purchasers who have purchased a combination of two items in edge 33e or the average volume resulting from averaging total purchase volumes of items. This allows for an analysis of a ratio between the number of purchasers who purchase a combination of two items in edge 33e and purchasers who simultaneously purchases more items. The above-described various pieces of information (for example, the average price resulting from averaging total purchase amounts and the average volume resulting from averaging total purchase volumes of items) necessary for generation of the node figure and the edge figure are stored in graph data 33.

Information presentation device 200 may display, in the form of an animation, a plurality of associated purchase graphs generated. This allows changes of locations where top selling items are placed to be easily recognized on, for example, a per time of day basis or a per day basis.

In a configuration where receiver 11 acquires POS data 31, shelf coordinate data 34, and store layout data 35 from the outside, receiver 11 serves as the acquisition unit. Furthermore, in a configuration where storage unit 30 pre-stores POS data 31, shelf coordinate data 34, and store layout data 35 and controller 20 acquires, from storage unit 30, POS data 31, shelf coordinate data 34, and store layout data 35, controller 20 serves as the acquisition unit.

Note that, in the display control processing of the associated purchase graph, the placement of store layout data 35 as the background image is performed in the last step, but may be performed in the first step.

Information presentation system 1 of the present disclosure can be configured with, for example, cooperation between a hardware resource such as a processor or a memory and a program.

In the first and second exemplary embodiments, descriptions have been given on the assumption that items to be handled in the store are goods. However, items for transaction with customers include not only goods but also services. Of stores, a barber shop or a game arcade does not sell items, but makes transaction with customers by providing the customers with opportunities of having haircuts or enjoying playing games. These activities are services, and implementing the content of the present disclosure also allows for a simulation of sales amounts gained through such services.

Furthermore, examples of such a facility include not only a store but also a shopping mall (shopping area) where a plurality of shops are located together and a theme park where a plurality of various attractions are located together. The information presentation device according to the present disclosure can be used for such a shopping mall or a theme park.

For example, in a case where the information presentation device according to the present disclosure is used for a shopping mall, the information presentation device includes: an acquisition unit that acquires purchase data indicating items purchased in each of stores that constitute the shopping mall, position information indicating where each of the items is placed in each of the stores in the shopping mall, and a layout map representing an inside of the shopping mall, the items being goods or services; and a controller that extracts a plurality of items purchased by a certain person from the purchase data based on a predetermined condition and generates sales information on the plurality of items thus extracted based on the purchase data. The information presentation device further includes a display unit that displays a plurality of first figures representing the plurality of items respectively and a second figure representing a link between the plurality of items together with the layout map based on the sales information and the position information. Note that such stores include, for example, stalls that are temporarily set up.

The use of such an information presentation device allows information on purchasers who purchase more items (e.g. goods or services) simultaneously in a shopping mall to be easily recognized.

Note that, in such a shopping mall, a plurality of stores individually make their own transactions. For a shopping mall, "simultaneously" means "in all transactions" that are made in a period from entering the shopping mall until leaving the shopping mall. Purchase of a plurality of items (e.g. goods or services) "simultaneously" made by a purchaser in a shopping mall corresponds to, for example, an aggregate of payments made at all stores in the shopping mall. That is, shopping is finished after payments are made at all the stores in the shopping mall. Even in a case where respective timings of payments at a plurality of stores are different from each other, the payments are aggregated with each other; thus, the case is defined that the items are purchased "simultaneously".

In a case where the information presentation device according to the present disclosure is used for a theme park, the information presentation device includes: an acquisition unit that acquires entry data indicating entry to each of attractions provided in the theme park, position information indicating where each of the attractions is located in the theme park, and a layout map representing an inside of the theme park; and a controller that extracts a plurality of attractions where a certain person has entered from the entry data based on a predetermined condition and generates entry information on the plurality of attractions thus extracted based on the entry data. The information presentation device further includes a display unit that displays a plurality of first figures representing the plurality of attractions respectively and a second figure representing a link between the plurality of attractions together with the layout map based on the entry information and the position information.

The use of such an information presentation device allows information on customers who simultaneously enters more attractions in a theme park to be easily recognized.

Note that, in such a theme park, a plurality of attractions individually make their own transactions. For a theme park, "simultaneously" means "in all transactions" that are made in a period from entering the theme park until leaving the theme park. Purchase of a plurality of items (e.g. goods or services) "simultaneously" made by a purchaser in a theme park corresponds to, for example, an aggregate of payments made at all attractions in the theme park. That is, shopping is finished after payments are made at all the attractions in the theme park. Even in a case where respective timings of payments at a plurality of attractions are different from each other, the payments are aggregated with each other; thus, the case is defined that the items are purchased "simultaneously".

Moreover, the content of the present disclosure can also be implemented for a case where transactions of items (e.g. goods or services) are made over the Internet. For example, the content of the present disclosure helps a conversion rate to increase in Internet transactions made with the help of an information technology (IT) (for example, a computer). Conversion refers to purchase of an item through, for example, Internet shopping. Further, the conversion rate refers to a proportion of a number of persons who have actually purchased a certain item to a number of persons who have visited a sales site for the certain item. The use of the information presentation device according to the present disclosure allows an increase in conversion rate. Note that, with a case where the item is not actually purchased but member registration or a request for a brochure is made at the site set as the conversion rate, the information presentation device according to the present disclosure can be used.

As described above, the exemplary embodiments have been described as examples of the technique in the present disclosure. For the description, the attached drawings and detailed description have been provided. Therefore, the components shown in the attached drawings and described in the detailed description may include, for the illustration of the above-described technique, not only components essential for the solution to the problem but also components not essential for the solution to the problem. Thus, it should not be immediately deemed that, merely based on the fact that the components that are not essential are shown in the attached drawings and described in the detailed description, the components that are not essential are essential.

Furthermore, since the aforementioned exemplary embodiments are intended to illustrate the technique in the present disclosure, various changes, replacements, additions, omissions, and the like can be made within the scope of the claims and their equivalents.

### INDUSTRIAL APPLICABILITY

The present disclosure is applicable to an information presentation device, an information presentation system, and an information presentation method that present information indicating items purchased in a facility such as a store.

### REFERENCE MARKS IN THE DRAWINGS

1: information presentation system
10: input and output unit
11: receiver
12: input unit
13: display unit
20: controller
21: POS data classifier
22: POS graph generator
23: store graph generator
24: graph merging unit
25: graph display controller
30: storage unit
100: POS terminal device
200: information presentation device

## Claims

1. An information presentation device comprising:
an acquisition unit that acquires purchase data indicating items purchased in a facility, position information indicating where each of the items is placed in the facility, and a layout map representing an inside of the facility, the items being goods or services;
a controller that extracts a plurality of items purchased by a certain person from the purchase data based on a predetermined condition and generates sales information on the plurality of items thus extracted based on the purchase data; and
a display unit that displays a plurality of first figures representing the plurality of items respectively and a second figure representing a link between the plurality of items together with the layout map based on the sales information and the position information.

2. The information presentation device according to claim 1, wherein the purchase data indicates all the plurality of items purchased by the certain person in a period from when the certain person enters the facility until when the certain person leaves the facility.

3. The information presentation device according to claim 1 or 2, wherein
the sales information includes node information that includes at least one of a sales amount, a sales volume, and a number of purchasers for each of the plurality of items extracted, and
the display unit displays the plurality of first figures, a size or a color of each of the plurality of first figures being changed based on the node information.

4. The information presentation device according to any one of claims 1 to 3, wherein
the sales information includes edge information that includes at least one of a number of purchasers who purchase two goods, two services, or one good and one service as the plurality of items, an average value of total sales amounts spent by the purchasers, and an average value of total purchase volumes of items purchased by the purchasers, and
the display unit displays the second figure, a size or a color of the second figure being changed based on the edge information.

5. The information presentation device according to any one of claims 1 to 4, wherein the predetermined condition includes at least one condition on a date, a day of week, a time of day, an item category, and a specific item.

6. The information presentation device according to any one of claims 1 to 4, wherein
each of the plurality of first figures is a figure including a dot, a circle, or a polygon, and
the second figure is a line figure including a straight line or a curve.

7. The information presentation device according to claim 1, wherein the facility is a single store.

8. The information presentation device according to claim 1, wherein the facility is a shopping mall where a plurality of stores are located together,

9. The information presentation device according to claim 1, wherein the facility is a theme park where a plurality of attractions are located together.

10. An information presentation device comprising:
an acquisition unit that acquires purchase data indicating items purchased in each of stores that constitute a shopping mall, position information indicating where each of the items is placed in each of the stores in the shopping mall, and a layout map representing an inside of the shopping mall, the items being goods or services;
a controller that extracts a plurality of items purchased by a certain person from the purchase data based on a predetermined condition and generates sales information on the plurality of items thus extracted based on the purchase data; and
a display unit that displays a plurality of first figures representing the plurality of items respectively and a second figure representing a link between the plurality of items together with the layout map based on the sales information and the position information.

11. An information presentation device comprising:
an acquisition unit that acquires entry data indicating entry to each of attractions provided in a theme park, position information indicating where each of the attractions is located in the theme park, and a layout map representing an inside of the theme park;
a controller that extracts a plurality of attractions where a certain person has entered from the entry data based on a predetermined condition and generates entry information on the plurality of attractions thus extracted based on the entry data; and
a display unit that displays a plurality of first figures representing the plurality of attractions respectively and a second figure representing a link between the plurality of attractions together with the layout map based on the entry information and the position information.

12. An information presentation system comprising:
a purchase terminal device that outputs purchase data indicating items purchased in a facility, the items being goods or services; and
the information presentation device according to any one of claims 1 to 5 that acquires the purchase data, the position information indicating where each of the items is placed in the facility, and the layout map representing the inside of the facility, and displays the plurality of first figures representing the plurality of items respectively and the second figure representing the link between the plurality of items together with the layout map.

13. An information presentation method comprising:
causing an acquisition unit to acquire purchase data indicating items purchased in a facility, position information indicating where each of the items is placed in the facility, and a layout map representing an inside of the facility, the items being goods or services;
causing a controller to extract a plurality of items purchased by a person from the purchase data based on a predetermined condition and generate sales information on the plurality of items thus extracted based on the purchase data; and
causing a display unit to display a plurality of first figures representing the plurality of items respectively and a second figure representing a link between the plurality of items together with the layout map based on the sales information and the position information.
